(19) Europäisches Patentamt / European Patent Office / Office européen des brevets

(11) **EP 4 054 804 B1**

(12) **FASCICULE DE BREVET EUROPEEN**

(45) Date de publication et mention de la délivrance du brevet:
**19.07.2023 Bulletin 2023/29**

(21) Numéro de dépôt: **20797769.5**

(22) Date de dépôt: **02.11.2020**

(51) Classification Internationale des Brevets (IPC):
**B25J 9/00** (2006.01) **B25J 17/00** (2006.01)
**B25J 9/16** (2006.01)

(52) Classification Coopérative des Brevets (CPC):
**B25J 9/0048; B25J 9/1623; B25J 17/00**

(86) Numéro de dépôt international:
**PCT/EP2020/080666**

(87) Numéro de publication internationale:
**WO 2021/089474 (14.05.2021 Gazette 2021/19)**

(54) **ARTICULATION À TROIS DEGRÉS DE LIBERTÉ POUR UN ROBOT ET PROCÉDÉ DE COMMANDE CORRESPONDANT**

GELENK MIT DREI FREIHEITSGRADEN FÜR ROBOTER UND ENTSPRECHENDES STEUERUNGSVERFAHREN

ARTICULATION HAVING THREE DEGREES OF FREEDOM FOR A ROBOT, AND CORRESPONDING CONTROL METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2019 FR 1912398**

(43) Date de publication de la demande:
**14.09.2022 Bulletin 2022/37**

(73) Titulaire: **Pollen Robotics**
**33300 BORDEAUX (FR)**

(72) Inventeurs:
- **LAPEYRE, Matthieu**
  **33300 BORDEAUX (FR)**
- **ROUANET, Pierre**
  **33000 BORDEAUX (FR)**
- **CRAMPETTE, Augustin**
  **33000 BORDEAUX (FR)**

(74) Mandataire: **Casalonga**
**Casalonga & Partners**
**Bayerstraße 71/73**
**80335 München (DE)**

(56) Documents cités:
CN-A- 107 932 480    CN-A- 108 972 505
US-A1- 2010 043 577    US-A1- 2012 286 123

- ANDREA BULGARELLI ET AL: "A Low-Cost Open Source 3D-Printable Dexterous Anthropomorphic Robotic Hand with a Parallel Spherical Joint Wrist for Sign Languages Reproduction", INTERNATIONAL JOURNAL OF ADVANCED ROBOTIC SYSTEMS, vol. 13, no. 3, 17 juin 2016 (2016-06-17), page 126, XP055707469, CR ISSN: 1729-8814, DOI: 10.5772/64113
- OMARALI BUKEIKHAN ET AL: "System integration of a solar sensor and a spherical parallel manipulator for a 3-axis solar tracker platform design", 2015 IEEE/SICE INTERNATIONAL SYMPOSIUM ON SYSTEM INTEGRATION (SII), IEEE, 11 décembre 2015 (2015-12-11), pages 546-551, XP032863437, DOI: 10.1109/SII.2015.7405038

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

*Domaine technique*

L'invention a pour domaine technique les articulations à actionneurs pour robots, et plus particulièrement les articulations à trois degrés de liberté.

L'invention a également pour domaine technique la commande d'articulations à trois degrés de liberté.

*Etat de la technique antérieure*

Le développement de robots sociaux, capables d'avoir une interaction naturelle avec l'humain dans des espaces publics et domestique, notamment pour un usage de divertissement des robots.

De tels robots doivent notamment avoir les caractéristiques suivantes :

- être sûrs dans les interactions, notamment physiques lors de contacts ou de manipulations opérées par l'homme,
- permettre de faire des mouvements dynamiques, à la fois pour être réactifs à un imprévu mais aussi pour créer des interactions plus ludiques et favoriser l'illusion de la vie,
- permettre de faire des animations de qualité, qui favorisent la compréhension intuitive chez l'humain des intentions du robot, et être capables d'agir dans le monde physique réel en manipulant des objets

La sûreté de fonctionnement découle notamment de la masse du robot ou de ses membres afin de limiter l'inertie dans le contrôle et limiter les risques de blesser le public.

Dans les robots, lorsque l'on veut créer une articulation qui a la possibilité de bouger selon trois degrés de liberté, la solution technique employée la plus fréquemment est un enchaînement de trois actionneurs en série. C'est ce que l'on retrouve sur la plupart des robots industriels mais aussi sur des robots humanoïdes au niveau des épaules et des hanches.

Le problème de ces articulations à actionneurs en séries se situe au niveau du mécanisme et de la dynamique.

D'un point de vue du mécanisme, les propriétés de rotation d'une rotule, qui est de pouvoir tourner à tout moment dans n'importe quelle direction, ne sont réalisées qu'autour de la zone initiale. Plus on s'en éloigne de cette zone, moins on conserve la propriété d'une rotule. En s'éloignant encore plus, on arrive à des positions dites de blocage de cardan (« gimbal lock » en langue anglaise) où l'on perd un des degrés de liberté.

D'un point de vue dynamique, le premier actionneur de la série supporte en plus de la charge utile, la masse des deuxième et troisième actionneurs. De même pour le second actionneur qui doit supporter la masse du troisième actionneur. Ainsi, pour assurer que l'articulation puisse être réactive et dynamique, il devient nécessaire de surdimensionner les premiers actionneurs ce qui alourdit l'ensemble du système et augmente d'autant son inertie et son coût.

Une alternative aux articulations à actionneurs en série sont les articulations à actionneurs parallèles. Ces mécanismes sont beaucoup plus complexes à réaliser et à piloter mais ont l'avantage que l'ensemble des actionneurs sont fixés au châssis du robot. Cela permet d'avoir à la fois une structure beaucoup plus légère sur la partie mobile et en plus de bénéficier de l'addition des puissances de chacun des actionneurs pour faire bouger la structure. Au final, cela permet de concevoir des systèmes très dynamiques, capables de bouger rapidement et précisément.

De l'état de la technique antérieure, on connaît les exemples suivants d'articulations à actionneurs parallèles.

Le document Bulgarelli et al. (« A Low-Cost Open Source 3D-Printable Dexterous Anthropomorphic Robotic Hand with a Parallel Spherical Joint Wrist for Sign Languages Reproduction », A. Bulgarelli et al., International Journal of Advanced Robotic Systems, Vol. 13, Issue 3, Jan. 01, 2016) divulgue une telle articulation à actionneurs parallèles dans le but de développer un poignet artificiel pour la communication à distance du langage des signes.

Le document Bulgarelli et al. divulgue une commande de l'articulation par l'intermédiaire d'une représentation en angles d'Euler. Une telle représentation est utilisée classiquement pour de tels systèmes complexes mais est instable. Elle peut donc conduire à un blocage de cardan.

De plus, dès que l'on s'éloigne de la position initiale de l'articulation, il devient de plus en plus difficile de caractériser la direction que l'on souhaite donner car il faut alors savoir comment combiner des rotations autour des différents axes, ce qui devient complexe dans une telle situation en utilisant une représentation d'Euler.

Le document Sudki et al. (« Marine Propulser based on a Three-Degree-of-Freedom Actuated Spherical Joint », Third International Symposium on Marine Prolusors, smp'13, May 2013) divulgue un actionneur à trois degrés de liberté pour un propulseur marin afin de répliquer l'épaule d'animaux marins, notamment du pingouin.

Les articulations à actionneurs parallèles de l'état de la technique présentent l'inconvénient d'un encombrement important du bâti sur lequel les moteurs sont fixés. Ces articulations sont difficilement intégrables dans un robot mobile.

Le document CN 108972505 A divulgue une articulation à trois degrés de liberté à cinématique parallèle de type 3PcSS+RTR. Une charnière centrale située entre les trois bras d'actionnement est nécessaire pour contraindre l'articulation à fonctionner comme un mécanisme à trois degrés de liberté.

Le document US 2012/286123 A1 divulgue une articulation à 6 degrés de liberté de type hexapode, qui est complexe et encombrante.

Le problème technique à résoudre est comment bénéficier des avantages d'un actionneur parallèle en disposant d'un encombrement réduit.

### *Exposé de l'invention*

L'invention a pour objet une articulation à trois degrés de liberté pour un robot, comprenant une plateforme, trois moteurs reliés chacun à une couronne par l'intermédiaire d'un pignon, chaque couronne étant disposée à l'intérieur d'un disque creux empilé sur une base, de sorte que

chaque disque soit solidaire d'une couronne, dans laquelle
chaque disque est par ailleurs lui-même solidaire d'une tête de disque s'étendant dans la même direction que l'empilement de la base et des disques, et dans laquelle, pour chaque tête de disque, un bras est connecté en rotation d'une part à la tête de disque et d'autre part à la plateforme, 1a plateforme étant reliée à la base et aux disques creux uniquement par les trois bras,
chaque moteur étant au moins partiellement compris à l'intérieur d'au moins un disque.

Chaque moteur peut être excentré par rapport à l'axe de rotation des disques et disposé dans un secteur angulaire différent, de sorte à contenir les trois moteurs dans la cavité délimitée par la base et les disques empilés

La position au repos de chaque tête de disque peut présenter un angle de décalage correspondant à l'angle de décalage entre les moteurs.

Chaque moteur peut par ailleurs être muni de moyens de détermination de l'axe de sortie du moteur par rapport à une position de référence, notamment des codeurs magnétiques.

Un autre objet de l'invention est un procédé de commande d'une articulation à trois degrés de liberté permettant de diriger la plateforme selon une position requise d'un vecteur lié à la plateforme et un angle de rotation requis autour du vecteur lié à la plateforme, le procédé comprenant les étapes suivantes :

on détermine les coordonnées du repère à trois axes lié à la plateforme de l'articulation pour la position initiale et on reçoit le vecteur normal à la plateforme correspondant à la position requise et un angle de rotation requis,
on détermine les coordonnées du vecteur de rotation permettant de passer de la position initiale de la plateforme à une position intermédiaire de la plateforme dans le repère à trois axes lié à la plateforme de l'articulation pour la position initiale, la position intermédiaire étant telle que le passage de la position intermédiaire de la plateforme à la position requise implique une rotation de la plateforme sur elle-même selon l'angle de rotation requis,
on détermine un angle de rotation initiale permettant de passer de la position initiale de la plateforme à une position intermédiaire de la plateforme,
on détermine les coordonnées du repère à trois axes lié à la plateforme de l'articulation pour la position requise dans le repère à trois axes lié à la plateforme de l'articulation pour la position initiale
on détermine l'angle de rotation du premier bras fonction des coordonnées du repère à trois axes lié à la plateforme de l'articulation pour la position requise dans le repère à trois axes lié à la plateforme de l'articulation pour la position initiale de l'angle de rotation requis, de l'angle de rotation initiale et de paramètres liés à la construction de l'articulation,
on détermine l'angle de rotation du deuxième bras fonction des coordonnées du repère à trois axes lié à la plateforme de l'articulation pour la position requise dans le repère à trois axes lié à la plateforme de l'articulation pour la position initiale, de l'angle de rotation requis additionné à une valeur angulaire de décalage, de l'angle de rotation initiale et de paramètres liés à la construction de l'articulation,
on détermine l'angle de rotation du troisième bras fonction des coordonnées du repère à trois axes lié à la plateforme de l'articulation pour la position requise dans le repère à trois axes lié à la plateforme de l'articulation pour la position initiale, de l'angle de rotation requis moins la valeur angulaire de décalage, de l'angle de rotation initiale et de paramètres liés à la construction de l'articulation,
pour chaque disque, on détermine un angle de rotation du disque fonction de l'angle de rotation du bras correspondant et des coordonnées du repère à trois axes lié à la plateforme de l'articulation pour la position requise dans le repère à trois axes lié à la plateforme de l'articulation pour la position initiale,
on commande chaque moteur avec l'angle de rotation du disque correspondant au moteur.

On peut déterminer le vecteur de rotation comme le produit vectoriel entre le vecteur normal à la plateforme dans la position initiale et le vecteur normal à la plateforme dans la position requise.

Les paramètres liés à la construction de l'articulation peuvent être le diamètre du cercle distal, le diamètre du cercle proximal et le centre du cercle proximal. Le cercle distal est le cercle tracé par un bras autour de la plateforme. Le cercle proximal est le cercle tracé par les disques.

L'angle de rotation peut être défini comme l'arc cosinus du produit scalaire d'un vecteur normal à la plateforme dans la position initiale par un vecteur normal à la plateforme dans la position requise.

Pour déterminer les coordonnées du repère à trois axes lié à la plateforme de l'articulation pour la position requise dans le repère à trois axes lié à la plateforme de l'articulation pour la position initiale, on peut déterminer un premier quaternion permettant de passer de la position initiale à la position intermédiaire puis et un deuxième quaternion permettant de passer de la position intermédiaire à la position requise par une rotation de la plateforme sur elle-même, et on peut déterminer la position requise de la plateforme dans le repère de la plateforme dans la position initiale appliquant successivement les deux quaternions à la position initiale de la plateforme.

Le système selon l'invention présente l'avantage d'être inversible, c'est-à-dire que l'articulation peut fonctionner en transducteur. En d'autres termes, une action sur l'articulation est transformée par les moteurs en courant électrique.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :

[Fig 1] illustre une vue en trois dimensions d'une articulation selon l'invention,
[Fig 2] illustre une vue latérale d'un bras selon l'invention, et
[Fig 3] illustre une vue en coupe d'un disque selon l'invention.

### Description détaillée

L'articulation selon l'invention comprend un système de trois axes concentriques pilotant l'actionneur. Les moteurs mettant en mouvement les axes concentriques sont intégrés à l'intérieur de l'articulation.

L'articulation 1 permet de déplacer une plateforme 2 selon trois axes de liberté par rapport à une base en commandant trois moteurs en rotation.

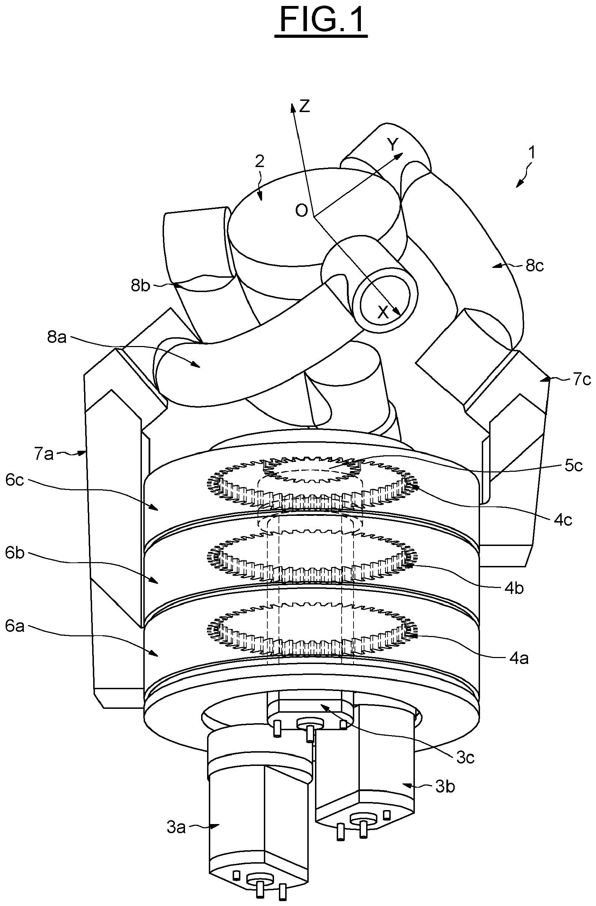

L'articulation 1 comprend une base dans laquelle sont disposés trois moteurs 3a,3b,3c reliés chacun à une couronne 4a,4b,4c par l'intermédiaire d'un pignon 5a,5b,5c. Sur la figure 1, le moteur 3c a été illustré à l'intérieur des couronnes 4a,4b,4c. Les moteurs 3a et 3b n'ont pas été illustrés par soucis de clarté. Néanmoins, le moteur 3b est disposé à l'intérieur des couronnes 4a,4b et le moteur 3a est disposé à l'intérieur de la couronne 4a. Chaque couronne 4a,4b,4c est disposée à l'intérieur d'un disque 6a,6b,6c creux empilé sur la base, de sorte que chaque disque 6a,6b,6c soit solidaire d'une couronne 4a,4b,4c. Chaque disque 6a,6b,6c est par ailleurs lui-même solidaire d'une tête de disque 7a,7b,7c s'étendant dans la même direction que l'empilement de la base et des disques 6a,6b,6c. Chaque moteur 3a,3b,3c est par ailleurs muni de moyens de détermination de la position angulaire de l'axe de sortie du moteur par rapport à une position de référence. De tels moyens de détermination peuvent être des capteurs de position angulaire ou des codeurs magnétiques.

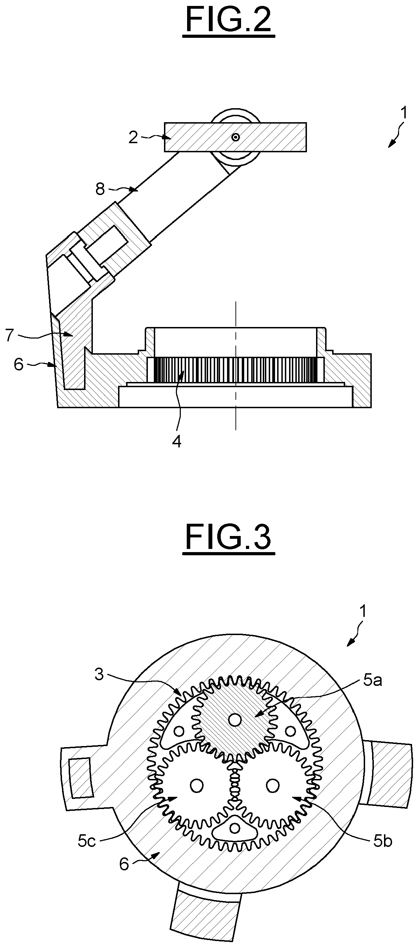

La figure 2 illustre la liaison d'un bras avec la plateforme et le disque dans un cas général transposable pour chaque bras 8a,8b,8c.

Pour chaque tête de disque 7,7a,7b,7c, un bras 8,8a,8b,8c en forme d'arc, est connecté en rotation d'une part à la tête de disque 7,7a,7b,7c et d'autre part à la plateforme 2. L'axe de rotation entre la tête de disque 7,7a,7b,7c et le bras 8,8a,8b,8c et l'axe de rotation entre le bras 8,8a,8b,8c et la plateforme 2 sont compris dans le même plan que celui comprenant le bras 8,8a,8b,8c correspondant. Avantageusement, la forme d'arc représente un quart de cercle.

Les disques 6,6a,6b,6c forment des carters et sont munis de roulements permettant d'en faciliter le mouvement, de réduire les frottements et l'usure et de maintenir l'alignement des disques 6,6a,6b,6c par rapport à la base et entre eux.

En d'autres termes, un premier disque 6a est connecté à un premier bras 8a par l'intermédiaire d'une tête de disque 7a, le premier disque 6a étant entrainé par un premier moteur 3a par l'intermédiaire d'une première couronne 4a, et d'un premier pignon 5a.

Le même agencement est prévu pour le deuxième disque 6b et le troisième disque 6c.

Plus précisément, un deuxième disque 6b est connecté à un deuxième bras 8b par l'intermédiaire d'une tête de disque 7b, le deuxième disque 6b étant entrainé par un deuxième moteur 3b par l'intermédiaire d'une première couronne 4b, et d'un deuxième pignon 5b. De même, un troisième disque 6c est connecté à un troisième bras 8c par l'intermédiaire d'une tête de disque 7c, le troisième disque 6c étant entrainé par un troisième moteur 3c par l'intermédiaire d'une première couronne 4c, et d'un troisième pignon 5c.

Le premier disque 6a est empilé sur le deuxième disque 6b, lui-même empilé sur le troisième disque 6c. Le troisième disque 6c est disposé sur la base. Le premier bras 6a, le deuxième bras 6b et le troisième bras 6c sont connectés à la plateforme.

En se référant à la figure 1, on peut voir que chaque pignon 5a,5b,5c est disposé à une hauteur différente de la base de sorte à entraîner mécaniquement la couronne 4a,4b,4c correspondante. De plus, de sorte à contenir les trois moteurs 3a,3b,3c dans la cavité délimitée par la base et les disques 6a,6b,6c empilés, chaque moteur 3a,3b,3c est excentré par rapport à l'axe de rotation des disques 6a,6b,6c et disposé dans un secteur angulaire différent. Cette disposition est illustrée par la figure 3. Ainsi, avec trois moteurs 3a,3b,3c, chaque moteur 3a,3b,3c est disposé dans un secteur de 120° différent.

Cet angle de décalage de 120° se retrouve également au niveau de la position au repos de chaque tête de disque 7,7a,7b,7c, chaque tête de disque 7,7a,7b,7c étant disposé à 120° des deux autres.

Les moteurs 3a,3b,3c sont commandés pour commander l'orientation de la plateforme 2, ce qui entraine une rotation de chaque disque 6a,6b,6c sur un cercle dit cercle proximal. La rotation de chaque disque 6a,6b,6c entraine la rotation du bras 8a,8b,8c qui lui est mécaniquement relié sur un autre cercle, dit cercle distal.

En se référant à la figure 1, on peut voir qu'un repère R lié à la plateforme 2 y est illustré. On définit le repère R à trois dimensions orthonormé direct comprenant une origine O(0,0,0) située au barycentre de la plateforme 2, un vecteur Z(0,0,1) normal à la plateforme 2, un vecteur Y(0,1,0) s'étendant parallèlement à la surface de la plateforme 2 et passant par la connexion du troisième bras 8c avec la plateforme 2, un vecteur X(1,0,0) orthogonal aux vecteurs X et Y, et formant un repère orthonormé direct. On rappelle qu'un repère direct à trois dimensions est un repère dans lequel l'angle entre le vecteur X et le vecteur Y est un angle direct, entre le vecteur Y et le vecteur Z est un angle direct et entre le vecteur Z et le vecteur X est un angle direct.

On va maintenant s'intéresser à la commande du système permettant de positionner la plateforme 2 dans une position prédéterminée.

Afin d'éviter un blocage de cardan, une représentation sous forme de quaternion est employée. Le quaternion est un vecteur normalisé de l'espace à trois dimensions combiné à une rotation d'un angle θ autour de ce vecteur.

On définit les grandeurs suivantes :

R0 = (X0, Y0, Z0) : Repère orthonormé direct définissant la position initiale de la plateforme 2

Rreq = (Xreq, Yreq, Zreq) Repère orthonormé direct définissant la position requise de la plateforme 2

V = (a, b, c) : vecteur de rotation orthogonal au plan défini par les vecteurs R0 et Rreq

θ: angle de rotation autour du vecteur V définissant la position requise pour la plateforme 2,

β: angle de rotation de la plateforme 2 sur elle-même entre la position initiale et la position requise.

On cherche à commander la plateforme 2 de sorte qu'elle passe d'une position initiale définie par le repère R0 à une position requise définie par le repère Rreq.

Le mouvement est alors décomposé en deux rotations. Une première rotation est une rotation d'un angle θ autour d'un vecteur V normal au plan défini par les repères R0 et Rreq.

Une deuxième rotation est une rotation d'un angle β autour du vecteur normal de la plateforme 2. On notera que le vecteur normal de la plateforme 2 peut être le vecteur Z0, Zreq ou tout autre vecteur intermédiaire.

L'enchainement des rotations est indifférent. Ainsi, la deuxième rotation peut être réalisée avant la première rotation.

Le vecteur V est alors défini comme le produit vectoriel des vecteurs Z0 et Zreq de la façon suivante :

[Math 1]

$$\vec{V} = \overrightarrow{Z0} \times \overrightarrow{Zreq}$$

L'angle de rotation θ est défini en fonction des composantes de R0 et Rreq normales à la plateforme 2.

[Math 2]

$$\theta = acos(Z0.Zreq)$$

Le vecteur V est ensuite normalisé pour pouvoir être utilisé avec les quaternions.

Le premier quaternion q1 associé à la première rotation d'un angle θ autour du vecteur V s'écrit de la manière suivante :

[Math 3]

$$q1 = (w1, x1, y1, z1)$$

Avec :

[Math 4]

$$w1 = \cos\left(\frac{\theta}{2}\right)$$

[Math 5]

$$x1 = \sin\left(\frac{\theta}{2}\right) * a1$$

[Math 6]

$$y1 = \sin\left(\frac{\theta}{2}\right) * b1$$

[Math 7]

$$z1 = \sin\left(\frac{\theta}{2}\right) * c1$$

On définit ensuite un deuxième quaternion q2, permettant de réaliser la deuxième rotation d'angle β autour du vecteur normal à la plateforme 2. En utilisant le même formalisme que celui présenté pour le premier quaternion q1, on obtient :

[Math 8]

$$q2 = (w2, x2, y2, z2)$$

Avec :

[Math 9]

$$w2 = \cos\left(\frac{\beta}{2}\right)$$

[Math 10]

$$x2 = \sin\left(\frac{\beta}{2}\right) * a2$$

[Math 11]

$$y2 = \sin\left(\frac{\beta}{2}\right) * b2$$

[Math 12]

$$z2 = \sin\left(\frac{\beta}{2}\right) * c2$$

Le vecteur normal à la plateforme 2 est de la forme (0,0,Z).
Les termes x2 et y2 du quaternion sont alors nuls.
On dispose ainsi de deux quaternions associés aux deux rotations permettant de passer du repère R0 lié à la position initiale au repère Rreq lié à la position requise.
Il demeure toutefois nécessaire de déterminer des angles de rotation des trois moteurs notés θ11, θ12, θ13 afin de réaliser les rotations définies par ces quaternions de sorte que les bras déplacent la plateforme 2 de la position initiale R0 à la position requise Rreq.

Pour déterminer ces angles de rotation, on définit les éléments suivants :

Rd : le rayon du cercle tracé par un bras autour de la plateforme 2, également appelé cercle distal
Rp : le rayon du cercle tracé par les disques, également appelé cercle proximal
Cp = (0, 0, Cz) : les coordonnées du centre du cercle tracé par les disques, également appelé cercle proximal
Pc = (0, 0, 0) : les coordonnées du centre du cercle distal,
θ3i : l'angle du bras i par rapport à la plateforme 2
θ1i : l'angle du disque i par rapport à sa position de référence

Les équations des cercles distaux Xi et du cercle proximal $X_{i_p}$ sont exprimés par les équations suivantes.

[Math 13]
$$X_i = P_c + R\cos(\theta 3i)\,Zreq + R\sin(\theta 3i)\,Xreq$$

[Math 14]
$$X_{i_p} = C + R_p\cos(\theta 1i)\,X_0 + R_p\sin(\theta 1i)\,Y_0$$

On définit alors un premier déplacement permettant de passer de la position initiale définie par le repère R0 à une position intermédiaire définie par le repère Rinter en appliquant le premier quaternion q1 :

[Math 15]
$$Rinter = q1 * R0 * \overline{q1}$$

On définit un deuxième déplacement permettant de passer de la position intermédiaire définie par le repère Rinter à la position requise définie par le repère Rreq en appliquant le deuxième quaternion q2 :

[Math 16]
$$Rreq = q2 * Rinter * \overline{q2}$$

Lorsque l'on applique ainsi les quaternions sur la coordonnée Z, on obtient :

[Math 17]
$$Zinter = q1 * Z0 * \overline{q1}$$

[Math 18]
$$Zreq = q2 * Zinter * \overline{q2}$$

Toutefois, la rotation définie par le deuxième quaternion q2 est réalisée autour de la direction Z. La direction Z est donc invariante et on en déduit donc que Zinter=Zreq.

Il est à noter que $\overline{q1}$ est le conjugué du quaternion q1 est égal à l'inverse du quaternion q1 si le vecteur de rotation est normalisé. On obtient alors $\overline{q1}$ = q1⁻¹ et $\overline{q2}$ = q2⁻¹

Comme il n'y a pas de rotation autour des axes X et Y lors de l'application du deuxième quaternion q2, le calcul des coordonnées Xreq et Yreq peut être réalisé en une seule étape impliquant les deux quaternions q1 et q2.

[Math 19]
$$Xreq = q2 * (q1 * X0 * \overline{q1}) * \overline{q2}$$

[Math 20]

$$Yreq = q2 * (q1 * Y0 * \overline{q1}) * \overline{q2}$$

S'agissant d'un changement de repère, on définit les coordonnées X0,Y0,Z0 et les coordonnées Xreq,Yreq,Zreq dans le repère R0 lié à la position initiale de la plateforme.

Ainsi, dans le repère R0, on a les expressions suivantes :

X0=(X0, 0, 0)
Y0=(0,Y0, 0)
Z0=(0,0,Z0)
Xreq=(Xx, Yx,Zx)
Yreq=(Xy, Yy,Zy)
Zreq=(Xz,Yz,Zz)

Connaissant les coordonnées Xreq,Yreq,Zreq, on peut alors déterminer les angles des disques θ11, θ12, θ13.

En résolvant l'équation Xi=Xp découlant des équations Eq. 1 et Eq. 2, on obtient le système d'équations suivant :

[Math 21]

$$R\cos(\theta 3i) \times X_z + R\sin(\theta 3i) \times X_x = R_p\cos(\theta 1i)$$

[Math 22]

$$R\cos(\theta 3i) \times Y_z + R\sin(\theta 3i) \times Y_x = R_p\sin(\theta 1i)$$

[Math 23]

$$Pc_z + R\cos(\theta 3i) \times Z_z + R\sin(\theta 3i) \times Z_x = C_z$$

En résolvant ce système d'équations [Math 21],[Math 22],[Math 23], on obtient les expressions suivantes des angles θ3i et θ1i respectivement.

[Math 24]

$$\theta 3i = 2\operatorname{atan}\left(\frac{RZ_x \pm \sqrt{(RZ_x)^2 + (RZ_z)^2 - \left(P_{c_z} - C_z\right)^2}}{RZ_z + C_z - P_{c_z}}\right)$$

[Math 25]

$$\theta 1i = \operatorname{atan2}(\cos(\theta 3i) \times Y_z + \sin(\theta 3i) \times Y_x, \cos(\theta 3i) \times X_z + \sin(\theta 3i) \times X_x)$$

On détermine d'abord l'angle θ3i de chaque bras i du système par application de l'équation [Math 24]. On détermine ensuite l'angle θ11 de chaque disque i du système par application de l'équation [Math 25].

Comme cela a été mentionné plus haut, le vecteur Zreq n'est pas modifié par la rotation selon le deuxième angle de rotation β. Par contre, les vecteur Xreq et Yreq sont bien modifiés par cette rotation.

Au repos, chaque disque est décalé de 120° l'un par rapport à l'autre. Si on prend la position angulaire du premier disque comme référence, on peut obtenir la position angulaire du deuxième disque en appliquant un décalage de +120° sur l'angle de deuxième rotation β et la position angulaire du troisième disque en appliquant un décalage de -120° sur l'angle de deuxième rotation β.

Il en découle que les valeurs Xx, Yx et Zx des équations [Math 24] et [Math 25] sont modifiées du fait de ce décalage.

Le mode de réalisation décrit ci-dessus comprend une deuxième rotation selon l'axe Z du repère lié à la plateforme. Dans d'autres modes de réalisation, la deuxième rotation peut être réalisée selon l'axe X ou l'axe Y, ou selon un vecteur lié à la plateforme. L'homme du métier adaptera le formalisme mathématique décrit ci-dessus en fonction de l'axe considéré.

De même la première rotation et la deuxième rotation peuvent être interverties sans sortir du périmètre de l'invention.

Le procédé de commande d'une articulation à trois degrés de liberté permettant de diriger la plateforme 2 selon une position requise de la plateforme 2 et un angle de rotation requis comprend les étapes suivantes.

Au cours d'une première étape, on détermine les coordonnées d'un repère orthonormé direct à trois axes lié à la plateforme 2 de l'articulation pour la position initiale et on les coordonnées d'un repère orthonormé direct à trois axes lié à la plateforme 2 de l'articulation pour la position requise et un angle de rotation requis.

Au cours d'une deuxième étape, on détermine les coordonnées d'un vecteur de rotation V permettant de passer du repère lié à la position initiale de la plateforme 2 à un repère lié à une position intermédiaire de la plateforme 2 dans le repère à trois axes lié à la plateforme 2 de l'articulation pour la position initiale, la position intermédiaire étant telle que le passage de la position intermédiaire de la plateforme 2 à la position requise implique une rotation de la plateforme 2 sur elle-même selon l'angle de rotation requis.

Au cours d'une troisième étape, on détermine un angle de rotation initiale permettant de passer de la position initiale de la plateforme 2 à une position intermédiaire de la plateforme 2.

Au cours d'une quatrième étape, on détermine les coordonnées du repère à trois axes lié à la plateforme 2 de l'articulation pour la position requise dans le repère à trois axes lié à la plateforme 2 de l'articulation pour la position initiale.

Au cours d'une cinquième étape, on détermine l'angle de rotation du premier bras θ31 fonction des coordonnées du repère à trois axes lié à la plateforme 2 de l'articulation pour la position requise dans le repère à trois axes lié à la plateforme 2 de l'articulation pour la position initiale de l'angle de rotation requis, de l'angle de rotation initiale et de paramètres liés à la construction de l'articulation,

Au cours d'une sixième étape, on détermine l'angle de rotation du deuxième bras θ32 fonction des coordonnées du repère à trois axes lié à la plateforme 2 de l'articulation pour la position requise dans le repère à trois axes lié à la plateforme 2 de l'articulation pour la position initiale, de l'angle de rotation requis additionné à une valeur angulaire de décalage, de l'angle de rotation initiale et de paramètres liés à la construction de l'articulation,

Au cours d'une septième étape, on détermine l'angle de rotation du troisième bras θ33 fonction des coordonnées du repère à trois axes lié à la plateforme 2 de l'articulation pour la position requise dans le repère à trois axes lié à la plateforme 2 de l'articulation pour la position initiale, de l'angle de rotation requis moins la valeur angulaire de décalage, de l'angle de rotation initiale et de paramètres liés à la construction de l'articulation,

Au cours d'une huitième étape, pour chaque disque, on détermine un angle de rotation du disque fonction de l'angle de rotation du bras correspondant et des coordonnées du repère à trois axes lié à la plateforme 2 de l'articulation pour la position requise dans le repère à trois axes lié à la plateforme 2 de l'articulation pour la position initiale,

On commande chaque moteur avec l'angle de rotation du disque correspondant au moteur.

## Revendications

1. Articulation à trois degrés de liberté pour un robot, comprenant une plateforme (2), trois moteurs (3a,3b,3c) reliés chacun à une couronne (4,4a,4b,4c) par l'intermédiaire d'un pignon (5a,5b,5c), chaque couronne (4,4a,4b,4c) étant disposée à l'intérieur d'un disque (6a,6b,6c) creux empilé sur une base, de sorte que chaque disque (6,6a,6b,6c) soit solidaire d'une couronne (4,4a,4b,4c), dans laquelle chaque disque (6,6a,6b,6c) est par ailleurs lui-même solidaire d'une tête de disque (7,7a,7b,7c) s'étendant dans la même direction que l'empilement de la base et des disques (6,6a,6b,6c), et dans laquelle, pour chaque tête de disque (7,7a,7b,7c), un bras (8,8a,8b,8c) est connecté en rotation d'une part à la tête de disque (7,7a,7b,7c) et d'autre part à la plateforme (2), la plateforme étant reliée à la base et aux disques creux uniquement par les trois bras (8,8a,8b,8c), chaque moteur (3a,3b,3c) étant au moins partiellement compris à l'intérieur d'au moins un disque (6,6a,6b,6c).

2. Articulation selon la revendication 1, dans laquelle chaque moteur (3a,3b,3c) est excentré par rapport à l'axe de rotation des disques (6,6a,6b,6c) et disposé dans un secteur angulaire différent, de sorte à contenir les trois moteurs (3a,3b,3c) dans la cavité délimitée par la base et les disques (6,6a,6b,6c) empilés.

3. Articulation selon la revendication 1, dans laquelle la position au repos de chaque tête de disque (7,7a,7b,7c), présente un angle de décalage correspondant à l'angle de décalage entre les moteurs.

4. Articulation selon la revendication 1, dans laquelle chaque moteur (3a,3b,3c) est par ailleurs muni de moyens de détermination de la position angulaire de l'axe de sortie du moteur par rapport à une position de référence, notamment des codeurs magnétiques.

**5.** Procédé de commande d'une articulation à trois degrés de liberté selon l'une quelconque des revendications précédentes permettant de diriger la plateforme (2) selon une position requise d'un vecteur lié à la plateforme (2) et un angle de rotation requis autour du vecteur lié à la plateforme (2), le procédé comprenant les étapes suivantes :

on détermine les coordonnées du repère à trois axes lié à la plateforme (2) de l'articulation pour la position initiale et on reçoit le vecteur normal à la plateforme (2) correspondant à la position requise et un angle de rotation requis,

on détermine les coordonnées du vecteur de rotation permettant de passer de la position initiale de la plateforme (2) à une position intermédiaire de la plateforme (2) dans le repère à trois axes lié à la plateforme (2) de l'articulation pour la position initiale, la position intermédiaire étant telle que le passage de la position intermédiaire de la plateforme (2) à la position requise implique une rotation de la plateforme (2) sur elle-même selon l'angle de rotation requis,

on détermine un angle de rotation initiale permettant de passer de la position initiale de la plateforme (2) à une position intermédiaire de la plateforme (2),

on détermine les coordonnées du repère à trois axes lié à la plateforme (2) de l'articulation pour la position requise dans le repère à trois axes lié à la plateforme (2) de l'articulation pour la position initiale,

on détermine l'angle de rotation du premier bras fonction des coordonnées du repère à trois axes lié à la plateforme (2) de l'articulation pour la position requise dans le repère à trois axes lié à la plateforme (2) de l'articulation pour la position initiale, de l'angle de rotation requis, de l'angle de rotation initiale et de paramètres liés à la construction de l'articulation,

on détermine l'angle de rotation du deuxième bras fonction des coordonnées du repère à trois axes lié à la plateforme (2) de l'articulation pour la position requise dans le repère à trois axes lié à la plateforme (2) de l'articulation pour la position initiale, de l'angle de rotation requis additionné à une valeur angulaire de décalage, de l'angle de rotation initiale et de paramètres liés à la construction de l'articulation,

on détermine l'angle de rotation du troisième bras fonction des coordonnées du repère à trois axes lié à la plateforme (2) de l'articulation pour la position requise dans le repère à trois axes lié à la plateforme (2) de l'articulation pour la position initiale, de l'angle de rotation requis moins la valeur angulaire de décalage, de l'angle de rotation initiale et de paramètres liés à la construction de l'articulation, pour chaque disque, on détermine un angle de rotation du disque fonction de l'angle de rotation du bras correspondant et des coordonnées du repère à trois axes lié à la plateforme (2) de l'articulation pour la position requise dans le repère à trois axes lié à la plateforme (2) de l'articulation pour la position initiale,

on commande chaque moteur avec l'angle de rotation du disque correspondant au moteur.

**6.** Procédé selon la revendication 5, dans lequel on détermine le vecteur de rotation comme le produit vectoriel entre le vecteur normal à la plateforme (2) dans la position initiale et le vecteur normal à la plateforme (2) dans la position requise.

**7.** Procédé selon l'une quelconque des revendications 5 ou 6, dans lequel les paramètres liés à la construction de l'articulation sont le diamètre du cercle distal, le diamètre du cercle proximal et le centre du cercle proximal

**8.** Procédé selon l'une quelconque des revendications 5 à 7, dans lequel l'angle de rotation est défini comme l'arc cosinus du produit scalaire d'un vecteur normal à la plateforme dans la position initiale par un vecteur normal à la plateforme dans la position requise.

**9.** Procédé selon l'une quelconque des revendications 5 à 8, dans lequel, pour déterminer les coordonnées du repère à trois axes lié à la plateforme (2) de l'articulation pour la position requise dans le repère à trois axes lié à la plateforme (2) de l'articulation pour la position initiale, on détermine un premier quaternion permettant de passer de la position initiale à la position intermédiaire puis et un deuxième quaternion permettant de passer de la position intermédiaire à la position requise par une rotation de la plateforme sur elle-même, et on détermine la position requise de la plateforme dans le repère de 1 plateforme dans la position initiale appliquant successivement les deux quaternions à la position initiale de la plateforme.

**Patentansprüche**

**1.** Gelenk mit drei Freiheitsgraden für einen Roboter, umfassend eine Plattform (2), drei Motoren (3a, 3b, 3c), die jeweils durch ein Ritzel (5a, 5b, 5c) mit einem Kranz (4, 4a, 4b, 4c) verbunden sind, wobei jeder Kranz (4, 4a, 4b, 4c) im Inneren einer hohlen Scheibe (6a, 6b, 6c) angeordnet ist, die derart auf einem Sockel aufgestapelt ist, dass jede Scheibe (6, 6a, 6b, 6c) fest mit einem Kranz (4, 4a, 4b, 4c) verbunden ist, wobei jede Scheibe (6, 6a, 6b, 6c) darüber hinaus selbst fest mit einem Scheibenkopf (7, 7a, 7b, 7c) verbunden ist, der sich in derselben Richtung wie die Stapelung des Sockels und der Scheiben (6, 6a, 6b, 6c) erstreckt, und wobei für jeden Scheibenkopf (7, 7a, 7b, 7c) ein Arm (8, 8a, 8b, 8c) einerseits mit dem Scheibenkopf (7, 7a, 7b, 7c) und andererseits mit der Plattform (2) drehend verbunden ist, wobei die Plattform nur durch die drei Arme (8, 8a, 8b, 8c) mit dem Sockel und mit den hohlen Scheiben verbunden ist,
wobei jeder Motor (3a, 3b, 3c) mindestens teilweise im Inneren mindestens einer Scheibe (6, 6a, 6b, 6c) enthalten ist.

2.  Gelenk nach Anspruch 1, wobei jeder Motor (3a, 3b, 3c) in Bezug auf die Drehachse der Scheiben (6, 6a, 6b, 6c) aus der Mitte versetzt ist, und in einem anderen Winkelsektor angeordnet ist, um die drei Motoren (3a, 3b, 3c) in dem Hohlraum zu enthalten, der durch den Sockel und die gestapelten Scheiben (6, 6a, 6b, 6c) begrenzt wird.

3.  Gelenk nach Anspruch 1, wobei die Ruhestellung eines jeden Scheibenkopfes (7, 7a, 7b, 7c) einen Versatzwinkel aufweist, der dem Versatzwinkel zwischen den Motoren entspricht.

4.  Gelenk nach Anspruch 1, wobei jeder Motor (3a, 3b, 3c) darüber hinaus mit Mitteln zum Bestimmen der Winkelposition der Ausgangsachse des Motors in Bezug auf eine Bezugsposition, insbesondere mit Magnetgebern, versehen ist.

5.  Verfahren zum Steuern eines Gelenks mit drei Freiheitsgraden nach einem der vorstehenden Ansprüche, welches das Leiten der Plattform (2) entsprechend einer benötigten Position eines Vektors in Verbindung mit der Plattform (2) und einem benötigten Drehwinkel um den Vektor in Verbindung mit der Plattform (2) ermöglicht, wobei das Verfahren die folgenden Schritte umfasst:

    man bestimmt die Koordinaten des Koordinatensystems mit drei Achsen in Verbindung mit der Plattform (2) des Gelenks für die Grundposition und empfängt den Vektor normal zur Plattform (2) entsprechend der benötigten Position und eines benötigten Drehwinkels,
    man bestimmt die Koordinaten des Drehvektors, welche es ermöglichen, von der Grundposition der Plattform (2) in eine Zwischenposition der Plattform (2) in dem Koordinatensystem mit drei Achsen in Verbindung mit der Plattform (2) des Gelenks für die Grundposition überzugehen, wobei die Zwischenposition dergestalt ist, dass der Übergang von der Zwischenposition der Plattform (2) in die benötigte Position eine Drehung der Plattform (2) um sich selbst um den benötigten Drehwinkel voraussetzt, man bestimmt einen Grunddrehwinkel, der es ermöglicht, von der Grundposition der Plattform (2) in eine Zwischenposition der Plattform (2) überzugehen,
    man bestimmt die Koordinaten des Koordinatensystems mit drei Achsen in Verbindung mit der Plattform (2) des Gelenks für die benötigte Position in dem Koordinatensystem mit drei Achsen in Verbindung mit der Plattform (2) des Gelenks für die Grundposition,
    man bestimmt den Drehwinkel des ersten Armes in Abhängigkeit der Koordinaten des Koordinatensystems mit drei Achsen in Verbindung mit der Plattform (2) des Gelenks für die benötigte Position in dem Koordinatensystem mit drei Achsen in Verbindung mit der Plattform (2) des Gelenks für die Grundposition, des benötigten Drehwinkels, des Grunddrehwinkels und von Parametern in Verbindung mit der Konstruktion des Gelenks,
    man bestimmt den Drehwinkel des zweiten Armes in Abhängigkeit der Koordinaten des Koordinatensystems mit drei Achsen in Verbindung mit der Plattform (2) des Gelenks für die benötigte Position in dem Koordinatensystem mit drei Achsen in Verbindung mit der Plattform (2) des Gelenks für die Grundposition, des benötigten Drehwinkels, der zu einem Versatzwinkelwert addiert wird, des Grunddrehwinkels und von Parametern in Verbindung mit der Konstruktion des Gelenks,
    man bestimmt den Drehwinkel des dritten Armes in Abhängigkeit der Koordinaten des Koordinatensystems mit drei Achsen in Verbindung mit der Plattform (2) des Gelenks für die benötigte Position in dem Koordinatensystem mit drei Achsen in Verbindung mit der Plattform (2) des Gelenks für die Grundposition, des benötigten Drehwinkels, abzüglich des Versatzwinkelwertes, des Grunddrehwinkels und von Parametern in Verbindung mit der Konstruktion des Gelenks,
    man bestimmt für jede Scheibe einen Drehwinkel der Scheibe in Abhängigkeit von dem Drehwinkel des entsprechenden Armes und der Koordinaten des Koordinatensystems mit drei Achsen in Verbindung mit der Plattform (2) des Gelenks für die benötigte Position in dem Koordinatensystem mit drei Achsen in Verbindung mit der Plattform (2) des Gelenks für die Grundposition,
    man steuert einen jeden Motor mit dem Drehwinkel der dem Motor entsprechenden Scheibe.

6.  Verfahren nach Anspruch 5, wobei man den Drehvektor als Vektorprodukt zwischen dem Vektor normal zur Plattform (2) in der Grundposition und dem Vektor normal zur Plattform (2) in der benötigten Position bestimmt.

7.  Verfahren nach einem der Ansprüche 5 oder 6, wobei die in Verbindung mit der Konstruktion des Gelenks der Durchmesser des distalen Kreises, der Durchmesser des proximalen Kreises und die Mitte des proximalen Kreises sind.

8.  Verfahren nach einem der Ansprüche 5 bis 7, wobei der Drehwinkel als Arkus-Kosinus des skalaren Produkts eines Vektors normal zur Plattform in der Grundposition mal einem Vektor normal zur Plattform in der benötigten Position definiert wird.

9.  Verfahren nach einem der Ansprüche 5 bis 8, wobei man zum Bestimmen der Koordinaten des Koordinatensystems mit drei Achsen in Verbindung mit der Plattform (2) des Gelenks für die benötigte Position in dem Koordinatensystem mit drei Achsen in Verbindung mit der Plattform (2) des Gelenks für die Grundposition einen ersten Quaternion-Wert bestimmt, der es ermöglicht, von der Grundposition in die Zwischenposition überzugehen, und danach einen zweiten Quaternion-Wert, der es ermöglicht, von der Zwischenposition durch eine Drehung der Plattform um sich selbst in die benötigte Position überzugehen, und

man die benötigte Position der Plattform in dem Koordinatensystem der Plattform in der Grundposition durch Anwenden nacheinander der beiden Quaternion-Werte auf die Grundposition der Plattform bestimmt.

**Claims**

1.  An articulation with three degrees of freedom for a robot, comprising a platform (2), three motors (3a, 3b, 3c) each connected to a crown (4, 4a, 4b, 4c) via a pinion (5a, 5b, 5c), each crown (4, 4a, 4b, 4c) being disposed inside a hollow disc (6a, 6b, 6c) stacked on a base, so that each disc (6, 6a, 6b, 6c) is integral with a crown (4, 4a, 4b, 4c), wherein each disc (6, 6a, 6b, 6c) is also in turn integral with a disc head (7, 7a, 7b, 7c) extending in the same direction as the stack of the base and the discs (6, 6a, 6b, 6c), and wherein, for each disc head (7, 7a, 7b, 7c), an arm (8, 8a, 8b, 8c) is rotatably connected on the one hand to the disc head (7, 7a, 7b, 7c) and on the other hand to the platform (2), the platform being connected to the base and to the hollow discs only by the three arms (8, 8a, 8b, 8c), each motor (3a, 3b, 3c) being at least partially comprised inside at least one disc (6, 6a, 6b, 6c).

2.  The articulation according to claim 1, wherein each motor (3a, 3b, 3c) is eccentric with respect to the axis of rotation of the discs (6, 6a, 6b, 6c) and disposed in a different angular sector, so as to contain the three motors (3a, 3b, 3c) in the cavity delimited by the stacked base and discs (6, 6a, 6b, 6c).

3.  The articulation according to claim 1, wherein the position at rest of each disc head (7, 7a, 7b, 7c) has an offset angle corresponding to the offset angle between the motors.

4.  The articulation according to claim 1, wherein each motor (3a, 3b, 3c) is also provided with means for determining the angular position of the output axis of the motor with respect to a reference position, in particular magnetic encoders.

5.  A method for controlling an articulation with three degrees of freedom according to any one of the preceding claims, allowing to direct the platform (2) according to a required position of a vector connected to the platform (2) and a required rotation angle around the vector connected to the platform (2), the method comprising the following steps:

    determining the coordinates of the three-axis reference frame related to the platform (2) of the articulation for the initial position and receiving the vector normal to the platform (2) corresponding to the required position and a required rotation angle,
    determining the coordinates of the rotation vector allowing to switch from the initial position of the platform (2) to an intermediate position of the platform (2) in the three-axis reference frame related to the platform (2) of the articulation for the initial position, the intermediate position being such that switching from the intermediate position of the platform (2) to the required position involves a rotation of the platform (2) on itself according to the required rotation angle,
    determining an initial rotation angle allowing to switch from the initial position of the platform (2) to an intermediate position of the platform (2),
    determining the coordinates of the three-axis reference frame related to the platform (2) of the articulation for the required position in the three-axis reference frame related to the platform (2) of the articulation for the initial position,
    determining the rotation angle of the first arm according to the coordinates of the three-axis reference frame related to the platform (2) of the articulation for the required position in the three-axis reference frame related to the platform (2) of the articulation for the initial position, the required rotation angle, the initial rotation angle and parameters related to the construction of the articulation,

determining the rotation angle of the second arm according to the coordinates of the three-axis reference frame related to the platform (2) of the articulation for the required position in the three-axis reference frame related to the platform (2) of the articulation for the initial position, the required rotation angle added to an angular offset value, the initial rotation angle and parameters related to the construction of the articulation, determining the rotation angle of the third arm according to the coordinates of the three-axis reference frame related to the platform (2) of the articulation for the required position in the three-axis reference frame related to the platform (2) of the articulation for the initial position, the required rotation angle minus the angular offset value, the initial rotation angle and parameters related to the construction of the articulation, determining, for each disc, a rotation angle of the disc according to the rotation angle of the corresponding arm and the coordinates of the three-axis reference frame related to the platform (2) of the articulation for the required position in the three-axis reference frame related to the platform (2) of the articulation for the initial position,

controlling each motor with the rotation angle of the disc corresponding to the motor.

6. The method according to claim 5, wherein the rotation vector is determined as the vector product between the vector normal to the platform (2) in the initial position and the vector normal to the platform (2) in the required position.

7. The method according to any one of claims 5 or 6, wherein the parameters related to the construction of the articulation are the diameter of the distal circle, the diameter of the proximal circle and the centre of the proximal circle.

8. The method according to any one of claims 5 to 7, wherein the rotation angle is defined as the arc-cosine of the scalar product of a vector normal to the platform in the initial position by a vector normal to the platform in the required position.

9. The method according to any one of claims 5 to 8, wherein, to determine the coordinates of the three-axis reference frame related to the platform (2) of the articulation for the required position in the three-axis reference frame related to the platform (2) of the articulation for the initial position, a first quaternion is determined allowing to switch from the initial position to the intermediate position, then and a second quaternion allowing to switch from the intermediate position to the required position by a rotation of the platform on itself, and

the required position of the platform in the reference frame of the platform in the initial position is determined by successively applying the two quaternions to the initial position of the platform.

# FIG.1

# FIG.2

# FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 108972505 A
- US 2012286123 A1

**Littérature non-brevet citée dans la description**

- **BULGARELLI et al.** *A Low-Cost Open Source 3D-Printable Dexterous Anthropomorphic Robotic Hand with a Parallel Spherical Joint Wrist for Sign Languages Reproduction*
- **A. BULGARELLI et al.** *International Journal of Advanced Robotic Systems,* 01 Janvier 2016, vol. 13 (3
- **SUDKI et al.** Marine Propulser based on a Three-Degree-of-Freedom Actuated Spherical Joint. *Third International Symposium on Marine Prolusors,* 13 Mai 2013